# EUROPÄISCHE PATENTSCHRIFT

(11) **EP 3 268 421 B1**
(45) Veröffentlichungstag und Bekanntmachung des Hinweises auf die Patenterteilung: **12.08.2020**
(21) Anmeldenummer: 16707778.3
(22) Anmeldetag: 03.03.2016
(51) Int. Cl.: C08J 9/224, C08J 9/232

(54) **ELEKTRISCH LEITFÄHIGE PARTIKELSCHAUMSTOFFE AUF BASIS VON THERMOPLASTISCHEN ELASTOMEREN**
ELECTRICALLY CONDUCTIVE PARTICULATE FOAMS BASED ON THERMOPLASTIC ELASTOMERS
MOUSSES À PARTICULE ÉLECTROCONDUCTRICES À BASE D'ÉLASTOMÈRES THERMOPLASTIQUES

(30) Priorität: 13.03.2015 EP 15159048
(43) Veröffentlichungstag der Anmeldung: 17.01.2018
(73) Patentinhaber: BASF SE, 67056 Ludwigshafen am Rhein (DE)
(72) Erfinder: PRISSOK, Frank, 49448 Lemfoerde (DE); HARMS, Michael, 49356 Diepholz (DE); SCHUETTE, Markus, 49324 Melle (DE)
(86) Internationale Anmeldenummer: PCT/EP2016/054536
(87) Internationale Veröffentlichungsnummer: WO 2016/146395

(56) Entgegenhaltungen:
- EP-A1- 0 705 682
- EP-A1- 1 016 354
- WO-A1-01/64414
- WO-A1-2007/082838
- US-A- 4 496 627

## Beschreibung

Die vorliegende Erfindung betrifft Schaumstoffpartikel auf Basis von thermoplastischen Elastomeren mit einer Beschichtung die elektrisch leitfähige Substanzen enthält, Verfahren zu deren Herstellung durch Beschichtung der Schaumstoffpartikel mit einer Emulsion einer leitfähigen Substanz in einem Weichmacher, sowie Verfahren zur Herstellung von Partikelschaumstoffen durch thermisches Verbinden der Schaumstoffpartikeln mittels hochfrequenter elektromagnetischer Strahlung.

Partikelschäume, wie solche aus Polypropylen oder Polystyrol werden üblicherweise in Formteilautomaten mittels Heißdampfverschweißung zu Formteilen z.B. für die Verpackungsindustrie verarbeitet. Partikelschäume aus TPU lassen sich neben dem Verschweißen mit Heißdampf auch durch Einschäumen oder Verkleben mit Polyurethan-Reaktivsystemen weiterverarbeiten. Da der Energiebedarf bei einer Heißdampfverschweißung sehr hoch ist, wird nach Alternativen gesucht. Ein Verschweißen mittels Heißluft ist im Prinzip möglich, ergibt aber bisher keine zufriedenstellenden Formteile.

Ein heutzutage weit verbreitetes Herstellverfahren zur Fertigung von Bauteilen stellt die thermische Verschweißung der vorgeschäumten Partikel durch Wasserdampf dar. Die bereits geschäumten Partikel werden aus einem Silo luftpneumatisch in das Druckfüllgerät der Formteilmaschine gesaugt, mit Druckluft komprimiert und in das Formwerkzeug eingeblasen. Da die Partikel kein weiteres Treibmittel zur Verschäumung enthalten, werden sie unter Komprimierung in das Formwerkzeug gefördert (Staudruckverfahren). Das Verschweißen der einzelnen Partikel erfolgt mittels Wasserdampf als Wärmeträger bei einem Bedampfungsdruck zwischen 2,5 und 3,5 bar. Nach dem Verschweißen wird das Formteil gekühlt und der Schaumdruck soweit abgebaut, dass eine Entformung möglich ist. Eine Beschreibung des Verfahrens für z.B. EPP-Partikel findet sich in EP 0 588 321 A1.

Ein in jüngster Zeit neu hinzugekommenes Material für Partikelschaumstoffe stellt expandiertes thermoplastisches Polyurethan (E-TPU) dar, E-TPU kann analog zu den oben beschriebenen Verfahren zu hochelastischen Bauteilen verschweißt werden, die aufgrund der exzellenten Haftung zwischen den Partikeln extremen dynamischen Beanspruchungen ausgesetzt werden können. Schaumstoffe auf Basis thermoplastischer Elastomeren und Verfahren zu deren Herstellung sind beispielsweise aus WO 2005/023920, WO 2007/082838, WO 2013/153190 und WO 2014/198779 bekannt.

In industriellen Anwendungen werden schon lange Bauteile aus antistatischen und elektrisch leitfähige Polymerschäumen für Anwendungen wie antistatische/leitfähige Schuhsohlen in der Elektroindustrie, leichte Bauteile zur Abschirmung von Strahlung, detektierbare Schaumstoffe oder elektrisch erwärmbare Schaumstoffe, gefordert.

Bisher wurden diese Schaumstoffe in der Art und Weise hergestellt, dass eine leitfähige Substanz direkt in die Polymermischung gegeben wurde, die in einer so hohen Konzentration vorliegen muss, dass sich die einzelnen leitfähigen Bereiche oder Partikel untereinander berühren und damit eine Ableitung des Stromes ermöglichen. Die hierfür erforderlichen Substanzkonzentrationen sind sehr hoch (oft >10 Gew%), wodurch die mechanischen Eigenschaften des Basispolymeren stark verschlechtert werden.

Die US 4,496,627 beschreibt elektrisch leitfähige Schaumstoffpartikel, die zumindest teilweise mit einer elektrisch leitfähigen Schicht versehen sind. Die elektrisch leitfähige Schicht kann vor oder nach dem Verschäumen aufgetragen werden. In einer Ausführungsform werden Polypropylenschaumstoffpartikel zur Beschichtung mit einer Ruß oder Graphit enthaltenden, hochmolekularen Polymerdispersion gemischt und getrocknet. Zur Erreichung der gewünschten Leitfähigkeit werden hohe Beschichtungsmengen benötigt.

Die WO 2007/023091 beschreibt Polystyrolschaumstoffpartikel, welche eine Wasserglas und athermanen Verbindungen wie Ruß oder Graphit enthaltende Polymerbeschichtung aufweisen und unter Druck in Abwesenheit von Wasserdampf zu Schaumstoffformkörpern versintert werden.

Ein alternatives Verfahren zum thermischen Verbinden der Schaumpartikel stellt die Hochfrequenz-Verschweißung dar, die u.a. in WO 2001/64414 beschrieben ist. Dabei werden die zu verschweißenden, geschäumten Partikel, insbesondere aus expandierbarem Polystyrol (EPS), expandiertem Polypropylen (EPP) oder expandierbarem Polyethylenterephtalat (EPET)vorab mit einem die elektromagnetischen Strahlung absorbierendem flüssigem Medium wie z.B. Wasser umgeben und anschließend durch Anlegen einer elektromagnetischen Strahlung wie z.B. Mikrowellen miteinander verbunden. Aufgrund der durch die höhere Polarität von thermoplastischen Polymeren bedingten Wasseraufnahme ist dieses Verfahren für Schaumstoffpartikel aus thermoplastischen Elastomeren nur bedingt möglich. Außerdem reicht die zu erzielende Temperatur beim Sieden von Wasser unter Normaldruck von 100°C meist nicht aus um die Elastomerpartikel zu verschweißen. Durch die Wasseraufnahme dringt das Wasser zu stark in die Partikel ein und die Erwärmung erfolgt nicht nur an den Kontaktstellen, sondern auch innerhalb der Partikel. Dadurch können die Partikel vor der Verschweißung kollabieren.

Ein Verfahren mit verbesserter Energiebilanz zum thermischen Verbinden von Schaumstoffpartikeln, insbesondere EPP oder EPS durch das Induktionsheizen ist in DE 10 2013 012 515 A1 beschrieben. Die Herstellung von Formteilen durch Induktionsheizen setzt allerdings eine elektrische Leitfähigkeit der Partikel zumindest an den zu verbindenden Oberflächen voraus. Dies kann durch Beschichtung mit elektrisch leitfähigen Füllstoffen wie z.B. metallisches Pulver oder Ruß, Nanotubes erreicht werden. Die Beschichtung der Partikel kann beispielsweise durch Sprühen erzielt werden.

Aufgabe der vorliegenden Erfindung war es, den genannten Nachteilen abzuhelfen und Schaumstoffpartikel, die sich mittels hochfrequenter elektromagnetischer Strahlung, insbesondere Mikrowellenstrahlung thermisch zu Partikelschaumstoffen verarbeiten lassen, sowie ein Verfahren zur Herstellung der Schaumstoffpartikel bereitzustellen. Des Weiteren sollten Schaumstoffpartikel, die schon mit geringen Mengen an Zusatzstoffen zu leitfähigen Partikelschaumstoffen verarbeitbar sind, bereitgestellt werden.

Diese Aufgabe wurde durch Schaumstoffpartikel auf Basis von thermoplastischen Elastomeren mit einer Beschichtung, die elektrisch leitfähige Substanzen enthält, gelöst, wobei die Schaumstoffpartikel aus thermoplastischem Polyurethan bestehen, und wobei die Beschichtung aus Graphit besteht, und wobei der Anteil des Graphits 0,1 bis 1,0 Gew.-%, bezogen auf die beschichteten Schaumstoffpartikel, beträgt.

Als thermoplastische Elastomere eignen sich grundsätzlich thermoplastische Polyurethane (TPU), thermoplastische Polyesterelastomere (bspw. Polyetherester und Polyesterester), thermoplastische Copolyamide (bspw. Polyethercopolyamide) oder thermoplastische Styrol Butadien-Blockcopolymere. Erfindungsgemäß eingesetzt werden Schaumstoffpartikel auf Basis von thermoplastischem Polyurethan(TPU).

Die Schaumstoffpartikel können durch Imprägnierung von thermoplastischen Elastomergranulaten mit einem Treibmittel in Suspension oder durch Schmelzeimprägnierung von aufgeschmolzenem thermoplastischen Elastomer mit einem Treibmittel und anschließender Granulierung erhalten werden. Geeignete Verfahren zur Herstellung der Schaumstoffpartikel auf Basis thermoplastischer Elastomeren sind beispielsweise in WO 2005/023920, WO 2007/082838, WO 2013/153190 und WO 2014/198779 beschrieben.

Die zur Herstellung der Schaumstoffpartikel eingesetzten thermoplastischen Elastomeren weisen bevorzugt eine Shore-Härte im Bereich von 30A bis 82D, bevorzugt im Bereich von 65A bis 96A, bestimmt nach DIN 53505. Bevorzugt weisen die eingesetzten thermoplastischen Elastomeren eine Reißdehnung von größer 50%, bevorzugt im Bereich von 200 bis 800%, gemessen nach DIN EN ISO 527-2, auf.

Die Beschichtung enthält grundsätzlich mindestens eine elektrisch leitfähige Substanz. Als elektrisch leitfähig werden Substanzen verstanden, die bei 300 K eine Leitfähigkeit von mindestens 10⁵ S/m, bevorzugt im Bereich von 10⁶ bis 10⁸ S/m aufweisen. Bevorzugt wird die Beschichtung als Dispersion der elektrisch leitfähigen Substanzen in einem Weichmacher, welcher nach dem Auftragen von dem thermoplastischen Elastomeren aufgenommen wird, so dass die Beschichtung im Wesentlichen aus der elektrisch leitfähigen Substanz besteht und insbesondere keine polymeren Bindemittel, wie Acrylatharze oder Emulsionspolymerisate, enthält. Erfindungsgemäß besteht die elektrisch leitfähige Beschichtung aus Graphit.

Die Schüttdichte der der beschichteten Schaumstoffpartikel liegt bevorzugt im Bereich von 30 bis 250 kg/m³.

Der Anteil des Graphits beträgt erfindungsgemäß 0,1 bis 1 Gew.-%, bezogen auf die beschichteten Schaumstoffpartikel, da die Beschichtung der Schaumpartikel und die damit erhältlichen Partikelschaumstoffe elektrisch leitfähig sein sollen. Für die Verschweißung mit hochfrequenter elektromagnetischer Strahlung wären in der Regel schon geringere Anteile elektrisch leitfähiger Substanzen ausreichend.

Elektrisch leitfähige Substanzen können grundsätzlich als Pulver, Lösung oder Dispersion mit üblichen Beschichtungsverfahren, wie Besprühen, Tauchen oder Benetzen, mit und ohne zusätzliche Hilfsstoffe auf die Schaumstoffpartikel aufgebracht werden. Hierzu können übliche Mischer, Sprühvorrichtungen, Tauchvorrichtungen bzw. Trommelapparaturen eingesetzt werden. Besonders bevorzugt werden die Schaumstoffpartikel mit einer Emulsion einer leitfähigen Substanz in einem Weichmacher beschichtet. Bei Weichmachern handelt es sich um chemische Substanzen, die Kunststoffen zugesetzt werden, um diese dehnbar, flexibel oder geschmeidig zu machen. Beispiele für Weichmacher sind: Phthalate, Alkylsulfonsäureester, Polyether, veresterte Polyether, Polyurethane, lineare Polyurethane, niedermolekulare Polyamide, Zitronensäureester, Adipinsäureester, 1,2-Cyclohexandicarbonsäurediisononylester und Glycerinester.

In einer erfindungsgemäßen und besonders bevorzugten Variante werden die Schaumstoffpartikel mit einer Emulsion von Graphit in 1,2,3-Propantrioltriacetat (Triacetin) beschichtet.

Auch anderweitig funktionale Beschichtungen sind möglich. Beispielsweise abriebbeständige oder niederschmelzende Polyurethanbeschichtungen. Als weitere Additive in der Beschichtung sind hier Wärme- bzw. IR-Strahlung absorbierende Substanzen wie Bornitrit und Aluminiumoxid zu nennen, die mit den beschriebenen Verfahren ein geschlossenes Netzwerk innerhalb eines Bauteils aus E-TPU liefern können. Es besteht auch die Möglichkeit der Einfärbung mit sehr geringen Pigmentmengen in der Beschichtung ohne die Schaumstoffpartikel in Masse einfärben zu müssen.

Des Weiteren können verschiedenste Fasern (Kunststoff, Glas, Metall) vor der Verschweißung auf die Oberfläche der Schaumstoffpartikel aufgebracht werden, die nach der Verarbeitung ein eigenes Netzwerk innerhalb der Bauteile ausbilden. Hierdurch können sich verbesserte mechanische Eigenschaften ergeben.

Überraschenderweise wurde gefunden, dass durch die erfindungsgemäße Ausstattung der Schaumstoffpartikel mit einer Beschichtung aus Graphit eine für eine Verschweißung ausreichende Mikrowellenabsorption erreicht wird.

Gegenstand der Erfindung ist daher auch ein Verfahren zur Herstellung von Partikelschaumstoffen durch thermisches Verbinden der oben beschriebenen, erfindungsgemäßen Schaumstoffpartikeln mittels hochfrequenter elektromagnetischer Strahlung, insbesondere mittels Mikrowellen thermisch verbunden werden. Als hochfrequent wir elektromagnetische Strahlung mit Frequenzen von mindestens 100 MHz verstanden. In der Regel wird elektromagnetische Strahlung im Frequenzbereich zwischen 100 MHz und 300 GHz verwendet. Bevorzugt werden Mikrowellen im Frequenzenbereich zwischen 0,5 und 100 GHz, besonders bevorzugt 0,8 bis 10 GHz und Bestrahlungszeiten zwischen 0,1 bis 15 Minuten verwendet.

Eine Beschichtung mit elektrisch leitfähigen Substanzen ermöglicht ein Verschweißen von Schaumstoffpartikeln in einem sehr breiten Frequenzbereich. Auch in Frequenzbereichen, in denen Wasser nicht zur Resonanz angeregt wird, erwärmen sich die beschichteten Schaumstoffpartikel vorzugsweise an den Kontaktflächen.

In einer bevorzugten Ausführungsform der Erfindung werden zunächst die Schaumpartikel dünn mit Graphit in einem Taumelmischer beschichtet, in eine nicht Mikrowellen absorbierende Form gegeben und anschließend mittels Mikrowelle verschweißt.

Aufgrund der Polarität nimmt E-TPU leicht Weichmacher, wie sie z.B. aus der PVC Chemie bekannt sind, auf. Dieser Effekt kann für eine einfache und schnelle Beschichtung der Partikel ausgenutzt werden. E-TPU wird mit einer pastösen Mischung aus Weichmacher und Beschichtungsmaterial (erfindungsgemäß Graphit) beaufschlagt und gerührt. Das Beschichtungsmaterial wird fein auf der Oberfläche der E-TPU Partikel verteilt und haftet auf dieser mittels des Weichmachers gut an. Bei der weiteren Behandlung bzw. Erwärmung der E-TPU Partikel zieht der Weichmacher (im Gegensatz zu PS, PP Partikeln) in die E-TPU Partikel ein und stört so die Haftung zwischen den einzelnen Schaumpartikeln nicht, wenn dies zu Partikelschaumstoffen thermisch verbunden werden.

Gegenstand der Erfindung sind weiterhin Partikelschaumstoffe, die nach dem oben beschriebenen, erfindungsgemäßen Verfahren erhältlich sind.

Da nach dem Verschweißen der Schaumstoffformkörper von einer wabenförmigen, leitfähigen dreidimensionalen Struktur durchzogen ist, ist der Formkörper aufgrund der eingeschweißten Partikel permanent leitfähig. Dieser Effekt kann durch simples Verwenden von Graphit oder Ruß als Füllstoff nicht erreicht werden, da in diesem Fall die Füllstoffe homogen im Innern der Schaumpartikel verteilt wären.

Aus den erfindungsgemäßen Schaumstoffpartikel auf Basis von thermoplastischem Polyurethan lassen sich elektrisch leitfähige Bauteile herstellen, die eine sehr hohe Leitfähigkeit bei gleichzeitig sehr geringen Anteil von Graphit aufweisen, da sich die Leitfähigkeit gebende Substanz nicht wie bisher üblich statistisch im Polymer verteilt, sondern nur auf der Oberfläche der einzelnen Polymerpartikel in konzentrierter Form vorliegt und hierdurch ein Netzwerk ausbildet, im Inneren der Partikel aber nicht vorhanden ist.

Die erfindungsgemäßen Partikelschaumstoffe weisen bevorzugt einen spezifischen Durchgangswiderstand von weniger als 10⁶ [Ω mm²/m] auf.

Für die erfindungsgemäßen Partikelschaumstoffe sind Anwendungen in allen Bereichen denkbar, wo ein besonders elastischer und zugleich leichter Werkstoff gefordert ist, zum Beispiel beim so genannten Protective Packaging, also der intelligenten Verpackung hochsensibler Güter. Sie sind aber auch geeignet für Sportböden sowie für Anwendungen im Automobilbau oder im Maschinenbau.

Aufgrund der antistatischen und elastomeren Eigenschaften sind die erfindungsgemäßen Partikelschaumstoffe für Anwendungen im Sport-, Schuh- und Verpackungsbereich, beispielsweise für als Sicherheitsschuhe oder als Verpackung von elektronischen Bauteilen oder Geräten geeignet.

Die thermische und elektrische Leitfähigkeit der erfindungsgemäßen Schaumstoffe können durch Dehnung oder Stauchung verändert werden. Ein elastischer Schaum kann bei Kompression eine Änderung der Leitfähigkeit bzw. des spezifischen Durchgangswiderstandes zeigen, dies könnte z.B. als Drucksensor angewendet werden.

### Beispiele

### Einsatzstoffe:

- E-TPU: Infinergy® 32-100 U10, expandierte, überwiegend geschlossenzellige Schaumstoffpartikel auf Basis von thermoplastischem Polyurethan, erhalten durch Aufschäumen von granuliertem Elastollan® der BASF Polyurethanes GmbH unter Druck und hoher Temperatur, Schüttdichten 110 g/l und 150 g/l.
- Graphit-Emulsion:: Emulsion von Graphit mit mindestens 99,5% Reinheit in Triacetin (1,2,3Propantrioltriacetat) Die in den Beispielen angegebenen Gewichtsteile Graphitpulver und Weichmacher wurden in einem Glasbecher mittels eines Dispergierstabes (Ultra Turrax) bis zur Homogenität verrührt.
- Eisen-Emulsion:: Emulsion von Carbonyleisenpulver (fein verteiltes, aus der Gasphase abgeschiedenes Eisenpulver mit mindestens 99% Reinheit und einer Korngröße kleiner 10µm) in Triacetin (1,2,3-Propantrioltriacetat) Die in den Beispielen angegebenen Gewichtsteile Carbonyleisenpulver und Weichmacher wurden in einem Glasbecher mittels eines Dispergierstabes (Ultra Turrax) bis zur Homogenität verrührt.
- Klebstoff:: Elastopave 6550/101 der BASF Polyurethanes GmbH, kompaktes, 2-Komponenten Polyurethan-System

### Geräte:

Labormikrowellensystem des Typs MLS-Ethos plus mit einer Höchstleistung von 2,5kW.

### Messmethoden:

Zur Bestimmung der Schüttdichte wurde ein 200 ml Gefäß mit den expandierten Partikeln gefüllt und das Gewicht mittels einer Waage bestimmt. Dabei kann von einer Genauigkeit von ± 5 g/l ausgegangen werden.

Die Raumgewichte der Schaumstoffplatten wurde nach DIN EN ISO 1183-1, A ermittelt.

Die Stauchhärte der Schaumstoffplatten wurde in Anlehnung an DIN EN ISO 3386 bei 10%, 25%, 50% und 75% Stauchung gemessen.

Die Druckverformung der Schaumstoffplatten (Schuhschaum) wurde nach Konditionierung (6h/50°C/50%) nach ASTM D395 gemessen.

Die Rückprallelastizität der Schaumstoffplatten wurde nach DIN 53512 bestimmt.

Bruchdehnung und Zugfestigkeit wurden nach DIN 53504 bestimmt.

Die Leitfähigkeit und der spezifische Durchgangswiderstand wurden in Anlehnung an DIN EN 61340 bestimmt.

### Beispiel B1:

97 Gewichtsteile der E-TPU-Schaumpartikel mit einer Schüttdichte von 110g/l wurden auf einem elektrischen Laborrollband zusammen mit einer Emulsion von 0,4 Gewichtsteilen Graphit in 2,6 Gewichtsteilen Triacetin in einem Gefäß miteinander vermischt. Innerhalb von 6h waren die E-TPU-Schaumpartikel mit einer vollständigen, homogenen Graphitschicht umhüllt.

52 Gramm der so umhüllten losen Einzelpartikel wurden in eine Pappform mit der Abmessung 220mm x 110mm x 15mm gefüllt. Durch den Pappdeckel wurde leichter Druck auf die Partikel ausgeübt. Diese gefüllte Form wurde hochkant im 50° Winkel auf dem äußeren Rand des Labormikrowellendrehtellers platziert und für 90 Sekunden mit einer Leistung von 400 Watt bestrahlt. Nach einer kurzen Abkühlzeit konnte eine zusammenhängende Schaumstoffplatte entnommen werden.

### Beispiel B2:

97,9 Gewichtsteile der E-TPU-Schaumpartikel mit einer Schüttdichte von 150g/l wurden auf einem Laborrollband zusammen mit einer Emulsion von 0,2 Gewichtsteilen Graphit in 1,9 Gewichtsteilen Triacetin in einem Gefäß miteinander vermischt. Innerhalb von 6h waren die E-TPU-Schaumpartikel mit einer vollständigen, homogenen Graphitschicht umhüllt.

60 Gramm der so umhüllten losen Einzelpartikel wurden in eine Pappform mit der Abmessung 220mm x 110mm x 15mm gefüllt. Durch den Pappdeckel wurde leichter Druck auf die Partikel ausgeübt. Diese gefüllte Form wurde hochkant im 50° Winkel auf dem äußeren Rand des Labormikrowellendrehtellers platziert und für 120 Sekunden mit einer Leistung von 400 Watt bestrahlt. Nach einer kurzen Abkühlzeit konnte eine zusammenhängende Schaumstoffplatte entnommen werden.

### Beispiel B3:

97 Gewichtsteile der E-TPU-Schaumpartikel mit einer Schüttdichte von 150g/l wurden auf einem elektrischen Laborrollband zusammen mit einer Emulsion von 0,4 Gewichtsteilen Graphit in 2,6 Gewichtsteilen Triacetin in einem Gefäß miteinander vermischt. Innerhalb von 6h waren die E-TPU-Schaumpartikel mit einer vollständigen, homogenen Graphitschicht umhüllt.

48 Gramm der so umhüllten losen Einzelpartikel wurden in eine Form aus Ultrason E2010 (Polyethersulfon) der BASF SE mit der Abmessung 150mm x 150mm x 70mm gefüllt. Durch einen verschiebbaren Ultrason-Deckel wurde leichter Druck auf die Partikel ausgeübt. Die gefüllte Form wurde auf dem äußeren Rand des Labormikrowellendrehtellers platziert und für 90 Sekunden mit einer Leistung von 400 Watt bestrahlt. Nach einer kurzen Abkühlzeit konnte eine zusammenhängende Schaumstoffplatte entnommen werden.

### Beispiel B4 (nicht erfindungsgemäß):

91,2 Gewichtsteile der E-TPU-Schaumpartikel mit einer Schüttdichte von 150g/l wurden auf einem elektrischen Laborrollband zusammen mit einer Emulsion von 6 Gewichtsteilen Eisencarbonyl-Pulver mit einer Körnung < 10µm in 2,8 Gewichtsteilen Triacetin in einem Gefäß miteinander vermischt. Innerhalb von 6h waren die E-TPU-Schaumpartikel mit einer vollständigen, homogenen Graphitschicht umhüllt.

56 Gramm der so umhüllten losen Einzelpartikel wurden in eine Form aus Ultrason E2010 (Polyethersulfon) der BASF SE mit der Abmessung 150mm x 150mm x 70mm gefüllt. Durch einen verschiebbaren Ultrason-Deckel wurde leichter Druck auf die Partikel ausgeübt. Die gefüllte Form wurde auf dem äußeren Rand des Labormikrowellendrehtellers platziert und für 110 Sekunden mit einer Leistung von 400 Watt bestrahlt. Nach einer kurzen Abkühlzeit konnte eine zusammenhängende Schaumstoffplatte entnommen werden.

### Vergleichsversuch V1:

60 g unbeschichtete E-TPU-Schaumstoffpartikel mit einer Dichte von 110 g/l wurden mit Wasserdampf zu Schaumstoffformkörpern verschweißt.

### Vergleichsversuch V2:

60 g unbeschichtete E-TPU-Schaumstoffpartikel mit einer Dichte von 110 g/l wurden mit 9 Gew.-% eines Klebstoffes zu Schaumstoffformkörpern verklebt.

### Vergleichsversuch V3:

60 g unbeschichtete E-TPU-Schaumstoffpartikel mit einer Dichte von 110 g/l wurden mit 23 Gew.-% eines Klebstoffes zu Schaumstoffformkörpern verklebt.

Die Eigenschaften der Schaumstoffplatten aus den Beispielen B1 - B4 und den Vergleichsversuchen V1 - V3 sind in Tabelle 1 zusammengestellt.

Die Schaumstoffplatten der Beispiele B1 und B2 weisen gegenüber den verklebten Schaumstoffplatten der Vergleichsversuche V2 und V3 eine höhere Rückprallelastizität auf. Vorteilhaft ist weiterhin, dass durch das Mikrowellenverschweißen (Beispiele B1 und B2) geringere Bauteilgewichte möglich sind als durch das Wasserdampfverschweißen (Vergleichsversuch V1). Eine Erhöhung der Rückprallelastizität sowie eine Reduzierung des Raumgewichtes wird als vorteilhaft betrachtet. Besonders vorteilhaft ist außerdem die hohe elektrische Leitfähigkeit der Schaumstoffplatten der Beispiele B1 bis B4 gegenüber den standardmäßig mit Wasserdampf verschweißten Schaumstoffplatten (Vergleichsversuch V1) und den verklebten Schaumstoffplatten (V2, V3).

**Tabelle 1: Eigenschaften der Schaumstoffplatten aus den Beispielen B1 und B2 und den Vergleichsversuchen V1 - V3**

| | B1 | B2 | B3 | B4 | V1 | V2 | V3 |
|---|---|---|---|---|---|---|---|
| Stauchhärte 1 0% [kPa] | 15 | 30,4 | | | 78 | 20,3 | 26,8 |
| Stauchhärte 25%[kPa] | 52,8 | 103,8 | | | 170 | 53 | 60,3 |
| Stauchhärte 50%[kPa] | 151,6 | 275,7 | | | 366,7 | 142 | 156,9 |
| Stauchhärte 75%[kPa] | 718,4 | 1607,3 | | | 1822 | 540,3 | 669,5 |
| Raumgewicht [g/l] | 165 | 229 | | | 253,5 | 135 | 152 |
| Druckvertormung[%] (6h/50°C/50%) | 72 | 62 | | | 28,9 | 43 | 35 |
| Rückprallelastizität [%] | 59 | 64 | | | 70 | 55 | 55 |
| Zugfestigkeit [kPa] | 64 | 294 | | | 1168 | 120 | 292 |
| Bruchdehnung [%] | 13 | 37 | | | 108 | 32 | 42 |
| Spez. Durchgangswiderstand [Ω mm²/m] | 66*10³ | 6,3*10³ | 6,5*10³ | 4,9*10⁵ | 1,7*10¹¹ | 1,3*10¹¹ | 1,6*10¹¹ |

## Patentansprüche

1. Schaumstoffpartikel auf Basis von thermoplastischen Elastomeren mit einer Beschichtung, welche mindestens eine elektrisch leitfähige Substanz enthält,
wobei die Schaumstoffpartikel aus thermoplastischem Polyurethan bestehen, und
wobei die Beschichtung aus Graphit besteht, und
wobei der Anteil des Graphits 0,1 bis 1 Gew.-%, bezogen auf die beschichteten Schaumstoffpartikel, beträgt.

2. Schaumstoffpartikel nach Anspruch 1, **dadurch gekennzeichnet, dass** sie eine Schüttdichte im Bereich von 30 bis 250 kg/m³ aufweisen.

3. Verfahren zur Herstellung von Schaumstoffpartikeln nach einem der Ansprüche 1 oder 2, **dadurch gekennzeichnet, dass** die Schaumstoffpartikel mit einer Emulsion einer leitfähigen Substanz in einem Weichmacher, ausgewählt aus Phthalaten, Alkylsulfonsäureestern, Polyethern, veresterten Polyethern, Polyurethanen, linearen Polyurethanen, niedermolekularen Polyamiden, Zitronensäureestern, Adipinsäureester, 1,2-Cyclohexandicarbonsäurediisononylester und Glycerinester, beschichtet werden.

4. Verfahren nach Anspruch 3, **dadurch gekennzeichnet, dass** die Schaumstoffpartikel aus thermoplastischem Polyurethan mit einer Emulsion von Graphit in 1,2,3-Propantrioltriacetat beschichtet werden.

5. Verfahren zur Herstellung von Partikelschaumstoffen durch thermisches Verbinden von Schaumstoffpartikeln nach einem der Ansprüche 1 oder 2 mittels hochfrequenter elektromagnetischer Strahlung.

6. Verfahren nach Anspruch 5, **dadurch gekennzeichnet, dass** die Schaumstoffpartikel mittels Mikrowellen im Frequenzbereich zwischen 100 MHz und 300 GHz thermisch verbunden werden.

7. Partikelschaumstoff, erhältlich nach dem Verfahren gemäß Anspruch 5 oder 6, **dadurch gekennzeichnet, dass** er einen spezifischen Durchgangswiderstand von weniger als 10⁶ [Ω mm²/m] aufweist, bestimmt in Anlehnung an DIN EN 61340.

8. Verwendung des Partikelschaumstoffs nach Anspruch 7 für Verpackungen oder Schuhe.

## Claims

1. Foam beads based on thermoplastic elastomers and having a coating comprising at least one electrically conductive substance, where the foam beads consist of thermoplastic polyurethane, and where the coating consists of graphite, and where the proportion of graphite is in the range from 0.1 to 1 wt%, based on the coated foam beads.

2. The foam beads according to claim 1 having a bulk density in the range from 30 to 250 kg/m³.

3. A process for producing foam beads according to either of claims 1 and 2, which comprises coating the foam beads with an emulsion of a conductive substance in a plasticizer selected from phthalates, alkylsulfonic esters, polyethers, esterified polyethers, polyurethanes, linear polyurethanes, low molecular weight polyamides, citric esters, adipic esters, diisononyl 1,2-cyclohexanedicarboxylate and glycerol esters.

4. The process according to claim 3 wherein the foam beads of thermoplastic polyurethane are coated with an emulsion of graphite in 1,2,3-propanetriol triacetate.

5. A process for producing bead foams by joining foam beads according to either of claims 1 and 2 together thermally using high-frequency electromagnetic radiation.

6. The process according to claim 5 wherein the foam beads are joined thermally using microwaves in the frequency range between 100 MHz and 300 GHz.

7. A bead foam obtainable by the process according to claim 5 or 6, **characterized by** a specific volume resistivity of less than 10⁶ [Ω mm²/m], determined in accordance with DIN EN 61340.

8. The use of the bead foam according to claim 7 for packaging or footwear.

## Revendications

1. Particules de mousse à base d'élastomères thermoplastiques munies d'un revêtement, qui contient au moins une substance électriquement conductrice,
les particules de mousse étant constituées de polyuréthane thermoplastique, et
le revêtement étant constitué de graphite, et
la proportion du graphite étant de 0,1 à 1 % en poids, par rapport aux particules de mousse revêtues.

2. Particules de mousse selon la revendication 1, **caractérisées en ce qu'**elles présentent une densité apparente dans la plage allant de 30 à 250 kg/m³.

3. Procédé de fabrication de particules de mousse selon l'une quelconque des revendications 1 ou 2, **caractérisé en ce que** les particules de mousse sont revêtues avec une émulsion d'une substance conductrice dans un plastifiant, choisi parmi les phtalates, les esters d'acides alkylsulfoniques, les polyéthers, les polyéthers estérifiés, les polyuréthanes, les polyuréthanes linéaires, les polyamides de faible poids moléculaire, les esters de l'acide citrique, les esters de l'acide adipique, l'ester diisononylique de l'acide 1,2-cyclohexanedicarboxylique et les esters de glycérine.

4. Procédé selon la revendication 3, **caractérisé en ce que** les particules de mousse en polyuréthane thermoplastique sont revêtues avec une émulsion de graphite dans du triacétate de 1,2,3-propanetriol.

5. Procédé de fabrication de mousses particulaires par liaison thermique de particules de mousse selon l'une quelconque des revendications 1 ou 2 au moyen d'un rayonnement électromagnétique de haute fréquence.

6. Procédé selon la revendication 5, **caractérisé en ce que** les particules de mousse sont reliées thermiquement au moyen de micro-ondes dans la plage de fréquence comprise entre 100 MHz et 300 GHz.

7. Mousse particulaire, pouvant être obtenue par le procédé selon la revendication 5 ou 6, **caractérisée en ce qu'**elle présente une résistance volumique spécifique de moins de 10⁶ [Q mm²/m], déterminée conformément à DIN EN 61340.

8. Utilisation de la mousse particulaire selon la revendication 7 pour des emballages ou des chaussures.
